(19) Europäisches Patentamt / European Patent Office / Office européen des brevets

(11) **EP 2 067 567 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
*B23P 15/00* *(2006.01)*       *F01D 5/34* *(2006.01)*
*F01D 5/02* *(2006.01)*       *F01D 5/16* *(2006.01)*

(21) Anmeldenummer: **08170479.3**

(22) Anmeldetag: **02.12.2008**

(54) **Verfahren zur Herstellung von in Integralbauweise ausgebildeten Laufrädern für Verdichter und Turbinen**

Method for manufacturing of integrally bladed rotors for compressors and turbines

Procédé de fabrication de rotors à aubage intégré pour compresseurs ou turbines

(84) Benannte Vertragsstaaten:
**DE FR GB**

(30) Priorität: **06.12.2007 DE 102007059155**

(43) Veröffentlichungstag der Anmeldung:
**10.06.2009 Patentblatt 2009/24**

(73) Patentinhaber: **Rolls-Royce Deutschland Ltd & Co KG**
**15827 Blankenfelde-Mahlow (DE)**

(72) Erfinder:
• **Kühhorn, Arnold**
**10717, Berlin (DE)**
• **Klauke, Thomas**
**03222 Lübbenau/Spreewald (DE)**

(56) Entgegenhaltungen:
**EP-A- 1 239 059**       **WO-A-2006/084438**
**JP-A- 54 114 619**

EP 2 067 567 B1

**Beschreibung**

Die Erfindung betrifft ein Verfahren zur Herstellung von in Integralbauweise ausgebildeten Laufrädern für Verdichter und Turbinen, insbesondere für Gasturbinentriebwerke, bei dem die eine Scheibe mit am Umfang angeformten Schaufeln umfassenden Laufräder mittels konventioneller Formgebungsverfahren gefertigt werden und anschließend durch chemische Bearbeitung in einem Ätzmedium die Dicke und Sehnenlänge der Schaufeln reduziert wird.

Ein solches Verfahren ist aus der EP 1 239 059 bekannt.

In der Verdichter- und Turbinentechnik und insbesondere bei Flugtriebwerken werden in zunehmendem Umfang in einem Stück gefertigte Laufräder, sogenannte BLISKS, eingesetzt. Gegenüber der konventionellen Bauweise, bei der separat gefertigte Laufschaufeln in einer Nut am Umfang der Scheibe gehalten sind, lassen die einstückig ausgebildeten Laufräder aufgrund ihrer geringen Masse höhere Rotationsgeschwindigkeiten zu, so dass ein verbessertes Druckverhältnis erzielt werden kann und damit leistungfähigere Triebwerke zur Verfügung stehen. Weiterhin treten keine Leckageverluste im Bereich des Schaufelfußes auf. Aufgrund der einstückigen Ausbildung und starren Kopplung von Scheibe und Schaufeln sind Blisks gegenüber Störungen der Rotationssymmetrie, das heißt einer Verstimmung der Gesamtstruktur, als sensibler anzusehen. Diese auch als "Mistuning" bezeichnete Besonderheit von Laufrädern in BLISK-Bauweise, die sich in spezifischen, durch den Herstellungsprozess und Materialinhomogenitäten bedingten unterschiedlichen Scheiben- als auch Schaufeleigenschaften widerspiegelt, ist infolge aerodynamischer Anregungen mit charakteristischen Schwingungsamplituden- und Spannungsüberhöhungen in den Schaufeln und daraus resultierenden, die Lebensdauer der Laufräder einschränkenden erhöhten Ermüdungserscheinungen verbunden.

Es wurde bereits ein Verfahren vorgeschlagen, mit dem die Eigenfrequenzen der einzelnen Schaufeln einer BLISK realitätsnah bestimmt werden können, um daraus - basierend auf der messtechnischen Bestimmung der Schaufeleigenfrequenzabweichungen vom Mittelwert aller Schaufeleigenfrequenzen - fertigungsbedingte Störungen der Rotationssymmetrie eines Laufrades zu erkennen und entsprechende Schlussfolgerungen über das Schwingungsverhalten der BLISK unter Betriebsbedingungen und deren Betriebssicherheit und Lebensdauer zu ziehen.

Aus der EP 1239059 A2 ist ein Verfahren zum Auswuchten von durch spanende Formgebung in Integralbauweise gefertigten Laufrädern bekannt, bei dem die Dicke und die Sehnenlänge von mindestens einer Schaufel durch Materialabtrag in einer Ätzlösung reduziert werden. Die Größe des Materialabtrags an der Schaufeloberfläche wird durch die Behandlungsdauer in einem Ätzbad bestimmt. Wenn nur eine von mehreren in das Ätzbad eingetauchten Schaufeln eine Dickenreduzierung und damit zum Zweck des Auswuchtens eine Gewichtsreduzierung erfahren soll, werden die übrigen Schaufeln mit einer gegenüber dem Ätzmedium chemisch resistenten Maskierung abgedeckt.

Der Erfindung liegt die Aufgabe zugrunde, ein Verfahren zur Herstellung von in Integralbauweise ausgebildeten, durch spanende und/oder elektrochemische Bearbeitung und/oder Reibschweißen gefertigten Verdichter- oder Turbinenlaufrädern für Gasturbinentriebwerke anzugeben, deren Schaufeln im wesentlichen übereinstimmende maximale Schwingungsamplituden und niedrige Schaufelbelastungen aufweisen, so dass eine lange Lebensdauer der Laufräder gewährleistet ist.

Erfindungsgemäß wird die Aufgabe mit einem Verfahren gemäß den Merkmalen des Patentanspruchs 1 gelöst. Vorteilhafte Weiterbildungen der Erfindung sind Gegenstand der Unteransprüche.

Der Grundgedanke der Erfindung besteht darin, dass nach der Herstellung des Laufrades mit herkömmlichen Formgebungsverfahren, beispielsweise durch Fräsen, die Eigenfrequenz der Schaufeln, die wesentlich durch die Schaufeldicke sowie der Sehnenlänge bestimmt ist, gemessen wird und aus der jeweiligen Eigenfrequenz die entsprechende Schaufelmasse errechnet wird. Ausgehend von der Schaufel der geringsten Schaufelmasse wird für alle übrigen Schaufeln deren jeweilige Schaufelmassenabweichung von der Schaufel mit der geringsten Schaufelmasse ermittelt und in einem Ätzverfahren von der betreffenden Schaufel abgetragen, so dass alle Schaufeln eine im Wesentlichen übereinstimmende Schaufelmasse und Schaufeleigenfrequenz, und zwar entsprechend der geringsten Schaufelmasse und eigenfrequenz, aufweisen, Dadurch können Amplitudenüberhöhungen und extreme Schaufelbelastungen weitestgehend vermieden werden, so dass die Lebensdauer des so gefertigten Laufrades erhöht wird. Eine zusätzliche vorteilhafte Wirkung der übereinstimmenden Fliehkraft-Belastung aller Schaufeln durch Reduzierung der Schaufelmassen der Schaufeln auf eine geringste übereinstimmende Schaufelmasse besteht zudem darin, dass eine mögliche Laufradunwucht verringert wird, da der durch die Schaufeln verursachte Unwuchtanteil eliminiert wird.

Gemäß einem weiteren Merkmal der Erfindung wird die Versteifung und Eigenfrectuenserhöhung der mit einem Dehnmeßstreifen versehenen Schaufeln bei einem vor der Serienfertigung geprüften Testlaufrad dadurch ausgeschaltet, dass während der Ätzbehandlung bei den betreffenden Schaufeln des Testlaufrades die Schaufeldicke sowie die Sehnenlänge entsprechend der aufgrund der Dehnmessstreifen zu erwartenden erhöhten Eigenfrequenz weiter reduziert wird. Somit kann das Messergebnis im Testbetrieb aufgrund der Dehnmessstreifenapplikation nicht verfälscht werden.

Die Verringerung der Schaufeldicke und der Sehnenlänge in der jeweils erforderlichen Größe ist durch die Konzentration des Ätzmittels und die Dauer der Einwirkung auf die Schaufel bestimmt.

In weiterer Ausbildung der Erfindung wird jede Schaufel einzeln in einem auf die Schaufelgröße abgestimmten, mit dem Ätzmittel gefüllten Behälter behandelt.

Das Laufrad kann für einen separaten Materialabtrag an jeder einzelnen Schaufel, aber auch als Ganzes in ein Ätzbad eingetaucht werden, wenn die Scheibe und alle übrigen - schon behandelten oder noch nicht behandelten - Schaufeln gegenüber dem Ätzmittel durch eine chemisch resistente Maskierung geschützt sind,

In vorteilhafter Weiterbildung des Ätzverfahrens kann bei einem vollständig in das Ätzbad eingetauchten Laufrad die von der geringsten Schaufelmasse jeweils kleinste Schaufelmassenabweichung in aufeinanderfolgenden Ätzschritten abgetragen werden. In diesem Fall ist die Scheibe mit einer Maskierung abgedeckt und vor jedem Ätzschritt wird die Schaufel mit der kleinsten Masse bzw. werden die schon behandelten Schaufeln, deren Masse bereits auf das Mindestmaß reduziert ist, durch das Aufbringen eines Maskierungsmittels vor der Einwirkung des Ätzmittels geschützt.

In Ausgestaltung der Erfindung erfolgt die Ermittlung der Eigenfrequenz der Schaufeln in der Weise, dass jede Schaufel einzeln und in reproduzierbarer Größe mit einem Modal-Hammer erregt wird und in von den anderen Schaufeln weitgehend entkoppeltem Zustand mit einem Laservibrometer berührungslos die jeweilige Eigenfrequenz gemessen wird. Die Entkopplung von den übrigen Schaufeln während der Messung der Eigenfrequenz erfolgt durch eine zusätzliche Verstimmung aller anderen, nicht gemessenen Schaufeln mit einem an diesen vorübergehend angebrachten Zusatzgewicht.

Die Formgebung des in Integralbauweise gefertigten Laufrades erfolgt mit bekannten Bearbeitungsverfahren, beispielsweise durch Fräsen, elektrochemische Bearbeitung oder Reibschweißen.

Ein Ausführungsbeispiel der Erfindung wird nachfolgend näher erläutert.

Zunächst wird nach herkömmlichen Methoden, beispielsweise durch Fräsen, für eine Verdichterstufe eines Gasturbinentriebwerks ein Laufrad in Blisk-Bauweise mit integral an eine Scheibe angeformten - beispielsweise 25 - Schaufeln hergestellt. Die Schaufeln weisen aufgrund der herstellungsbedingt voneinander abweichenden Schaufelgeometrien und/oder von Materialinhomogenitäten unterschiedliche Eigenfrequenzen auf, so dass die maximalen Schaufelamplituden und Schaufelspannungen von Schaufel zu Schaufel variieren und die Schaufeln im Betrieb - mit der Folge einer verminderten Lebensdauer - unterschiedlich und teilweise sehr hoch belastet werden würden.

Im nächsten Schritt wird von jeder einzelnen Schaufel in einem von den übrigen Schaufeln weitgehend entkoppelten Zustand die Eigenfrequenz gemessen. Zur Entkopplung werden die nicht untersuchten Schaufeln mit einer identischen Zusatzmasse noch zusätzlich stark verstimmt. Danach wird die zu untersuchende Schaufel mit einem Modal-Hammer in eine - bei der Untersuchung der anderen Schaufeln reproduzierbare - Schaufelerregung versetzt und mit einem Laservibrometer die Eigenfrequenz der Schaufel berührungslos gemessen.

Nachdem in der zuvor beschriebenen Weise für alle Schaufeln des Laufrades die Schaufeleigenfrequenz $f_{schaufel}$ bestimmt wurde, werden über die zwischen der Schaufeleigenfrequenz und der Schaufelmasse $m_{schaufel}$ bestehenden Beziehung

$$m_{schaufel} = f(f_{schaufel})$$

die jeweiligen individuellen Schaufelmassen $m_{schaufel}$ bestimmt.

Auf der Basis der von allen untersuchten Schaufeln ermittelten geringsten Schaufelmasse, das heißt, der Schaufel mit der geringsten Eigenfrequenz und dementsprechend geringsten Schaufelmasse $m_{schaufelmin}$ als Referenzgröße, wird nun die von jeder einzelnen Schaufel individuell abzutragende Materialmasse

$$\Delta m_{schaufelabzutragen} = m_{schaufel} - m_{schaufelmin}$$

errechnet.

Im darauf folgenden Schritt wird von den einzelnen Schaufeln die jeweils über die geringste Schaufelmasse hinausgehende Materialmenge in einem Ätzverfahren entfernt, so dass alle Schaufeln die annähernd gleiche Dicke, Sehnenlänge sowie Masse und damit die gleiche Eigenfrequenz haben und somit unterschiedliche Schaufelbelastungen vermieden werden. Die abgetragene Materialmenge wird durch die Ätzdauer und die Konzentration der Ätzlösung bestimmt. Die abgetragene Materialmenge kann durch zwischenzeitliche Messung der Schaufeleigenfrequenz entsprechnd dem oben erwähnten Messverfahren überprüft werden.

Das Abtragen des Materials erfolgt gemäß einer ersten Ausführungsvariante durch individuelles Eintauchen der betreffenden Schaufel in ein für eine einzelne Schaufel ausgebildetes Ätzbad oder - gemäß einer zweiten, im vorliegenden Ausführungsbeispiel geschilderten Variante - durch Eintauchen aller Schaufeln in ein gemeinsames Ätzbad in mehreren aufeinanderfolgenden Arbeitsschritten. Dabei sind die Scheibe und zunächst nur die dünnste Schaufel, bei der kein Materialabtrag erfolgt, durch eine Maskierung vor der Einwirkung des Ätzbades geschützt und es wird im ersten Ätzschritt von allen nicht maskierten Schaufeln die Materialmenge abgetragen, die von der Schaufel mit der geringsten abzutragenden Materialmenge entfernt werden muss. Nach dem ersten Ätzschritt wird auch die zweite, auf die kleinste Dicke verringerte Schaufel maskiert. Im nächsten Ätzschritt wird von den verbliebenen Schaufeln die Materialmenge entfernt, die dem Materialüberschuss auf der verbliebenen dünnsten, nicht abgedeckten Schaufel entspricht. Diese Arbeitsschritte werden so lange fortgesetzt, bis auch die Masse der anfangs dicksten Schaufel mit Hilfe der Ätzlösung auf die Masse der Schaufel mit der anfangs geringsten Masse reduziert ist. Zwischen den einzelnen Arbeitsschritten kann die Schaufeleigenfrequenz und der Materialabtrag immer wieder überprüft werden.

Zum Schluss wird die Eigenfrequenz der einzelnen Schaufeln - wie oben beschrieben - nochmals bestimmt. Sofern übereinstimmende Eigenfrequenzen und Massen festgestellt werden, ist das Verfahren beendet. Andernfalls wird das zuvor beschriebene Ätzverfahren wiederholt.

Die Schaufeln der Blisk weisen jetzt in Bezug auf Masse und Eigenfrequenz im Wesentlichen identische Eigenschaften auf, so das durch ungleichmäßige Druckverteilung im Strömungskanal angeregte maximale Schaufelamplituden der bei der Blisk-Bauweise ungedämpften Schaufeln und dementsprechend hohe Schaufelbelastungen vermieden werden. Gleichzeitig wird eine durch unterschiedliche Schaufelmassen verursachte Unwucht der nach dem vorstehend beschriebenen Verfahren gefertigten Laufräder weitestgehend beseitigt und die Unwucht des Laufrades als Ganzes verringert.

Das zuvor beschriebene sukzessive Ätzen kann gemäß einer dritten Variante auch so abgewandelt werden, dass das Laufrad in ein gemeinsames Ätzbad eintaucht und für jede Schaufel der Materialabtrag auf die zuvor ermittelte geringste Referenzmasse einzeln erfolgt, wobei alle Teile, bei denen keine Materialabtragung erfolgen soll, maskiert werden.

Vor der Serienproduktion einer Vielzahl von Laufrädern gemäß dem zuvor beschriebenen Verfahren wird ein Testlaufrad an einzelnen, zuvor ausgewählten Schaufeln mit Dehnmessstreifen versehen, montiert und in einem Probelauf anhand der von den Dehnmessstreifen gelieferten Ergebnisse auf hinsichtlich des Schwingungsverhaltens der Schaufeln gegebenenfalls vorhandene Schaufelbelastungen infolge von Amplitudenüberhöhungen überprüft. Das Aufbringen der Hochtemperatur-Dehnmessstreifen auf die Schaufeloberflächen, hier mittels keramischem Klebstoff, bewirkt eine Erhöhung der Steifigkeit des Schaufel-Dehnmessstreifen- Verbandes und damit eine Vergrößerung der Eigenfrequenz des betreffenden Schaufel-Dehmnessstreifen-verbandes, die im Ergebnis der Überprüfung des Testlaufrades zu einer Fehlinterpretation der tatsächlichen Laufradeigenschaften führen kann. Die für die Anbringung der Dehnmessstreifen ausgewählten Schaufeln des Testlaufrades werden daher während des oben beschriebenen Ätzverfahrens zusätzlich so in der Schaufeldicke, Sehnenlänge und somit auch der Schaufelmasse und der Eigenfrequenz reduziert, dass die durch das Aufbringen der Dehnmessstreifen zu erwartende Abweichung von den Schaufeleigenfrequenzen aller weiteren, uninstrumentierten Schaufeln ausgeglichen wird und während des Probelaufs der Testblisk alle Schaufeln trotz der an einzelnen Schaufeln angebrachten Dehnmessstreifen die gleiche Eigenfrequenz aufweisen und somit das Testergebnis nicht verfälscht wird.

## Patentansprüche

1. verfahren zur Herstellung von in Integralbauweise ausgebildeten Laufrädern für Verdichter und Turbinen, insbesondere für Gasturbinentriebwerke, bei dem die eine Scheibe mit am Umfang angeformten Schaufeln umfassenden Laufräder mittels konventionellerFormgebungsverfahren gefertigt werden und anschließend durch chemische Bearbeitung in einem Ätzmedium die Dicke und Sehnenlänge der Schaufeln reduziert wird, **dadurch gekennzeichnet, dass**

   - im Anschluss an die Formgebung die Eigenfrequenz ($f_{schaufel}$) jeder einzelnen Schaufel gemessen wird und
   - aus der zwischen der Schaufeleigenfrequenz und der Schaufelmasse bestehenden Beziehung die jeweilige Schaufelmasse ($m_{schaufel}$) der einzelnen Schaufeln bestimmt wird und
   - für jede Schaufel die Abweichung ($\Delta m_{schaufelabzutragen}$) der jeweiligen Schaufelmasse von der Schaufel mit der geringsten Schaufelmasse ($m_{schaufelmin}$) ermittelt wird und
   - anschließend von den einzelnen Schaufeln die jeweilige Abweichung der Schaufelmasse von der geringsten Schäufelmasse mit einem Ätzmittel abgetragen wird, so dass alle Schaufeln mit der geringsten Schaufelmasse und -eigenfrequenz ($m_{schaufelmin}$, $f_{schaufelmin}$) im Wesentlichen übereinstimmende Massen und Eigenfrequenzen aufweisen.

2. Verfahren nach Anspruch 1, **dadurch gekennzeichnet, dass** das Abtragen der überschüssigen Schaufelmasse ($\Delta m_{schaufelabzutragen}$) durch Eintauchen in eine Ätzlösung in Abhängigkeit von der Konzentration der Ätzlösung und/ oder der Eintauchzeit erfolgt.

3. Verfahren nach Anspruch 2, **dadurch gekennzeichnet, dass** das zu behandelnde Laufrad als Ganzes in die Ätzlösung eingetaucht wird und von den Schaufeln in aufeinanderfolgenden Ätzschritten die jeweils kleinste abweichende Schaufelmasse abgetragen wird, wobei die Scheibe des Laufrades und die Schaufel/die Schaufeln mit der geringsten Schaufelmasse vor jedem Ätzschritt mit einer die nicht zu behandelnden Schaufelteile schützenden Maskierung abgedeckt werden.

**4.** Verfahren nach Anspruch 2, **dadurch gekennzeichnet, dass** das zu behandelnde Laufrad als Ganzes in die Ätzlösung eingetaucht und von jeder Schaufel einzeln die jeweils über die kleinste Schaufelmasse hinausgehende Schaufelmasse in einem einzigen Ätzschritt abgetragen wird, wobei während des betreffenden Ätzschrittes die übrigen mit einer Maskierung abgedeckt sind.

**5.** Verfahren nach Anspruch 2, **dadurch gekennzeichnet, dass** die Schaufeln einzeln in ein abgestimmt auf die Schaufelgröße dimensioniertes Ätzbad eingetaucht werden und die jeweils über die kleinste Schaufelmasse hinausgehende Schaufelmasse in einem einzigen Ätzschritt abgetragen wird.

**6.** Verfahren nach Anspruch 1, **dadurch gekennzeichnet, dass** vor der Serienproduktion der Laufräder ein mit Dehnmessstreifen versehenes Testlaufrad einem Probelauf unter Betriebsbedingungen unterzogen wird, wobei die durch das Aufbringen der Dehnmessstreifen bedingte Schaufelversteifung und Erhöhung der Eigenfrequenz durch einen erhöhten Materialabtrag während des Ätzens der Schaufel ausgeglichen wird.

**7.** Verfahren nach Anspruch 1, **dadurch gekennzeichnet, dass** die Eigenfrequenzmessung der einzelnen Schaufeln in einem von den übrigen, durch Anbringen eines Zusatzgewichts stark verstimmten Schaufeln weitestgehend entkoppelten Zustand durchgeführt wird, wobei die auszumessende Schaufel mit einem Modalhammer erregt und anschließend die Eigenfrequenz ($f_{schaufel}$) mit einem Laservibrometer berührungslos gemessen wird.

**8.** Verfahren nach Anspruch 1, **dadurch gekennzeichnet, dass** die Fertigung der Laufräder durch Fräsen und/oder elektrochemische Bearbeitung und/oder Reibschweißen erfolgt.

## Claims

**1.** Method for the manufacture of integrally designed rotor wheels for compressors and turbines, especially for gas-turbine engines, in which the rotor wheels, which include a disk with peripherally formed-on rotor blades, are manufactured by conventional shaping methods and the thickness and chord length of the blades are subsequently reduced by chemical processing in an etchant, **characterized in that**

- after forming, the natural frequency ($f_{blade}$) of each individual blade is measured, and
- the respective blade mass ($m_{blade}$) of the individual blades is determined via the relation existing between the blade natural frequency and the blade mass, and
- for each blade the difference ($\Delta m_{stock\ to\ be\ removed}$) between the respective blade mass and the blade with minimum mass ($m_{blade\ min.}$) is determined, and
- finally the mass difference between the respective blade mass and the blade mass is removed by means of an etchant, so that all blades with minimum blade mass and natural frequency ($m_{blade\ min.}$, $f_{blade\ min}$) essentially have corresponding masses and natural frequencies.

**2.** Method in accordance with Claim 1, **characterized in that** excessive blade mass ($\Delta m_{stock\ to\ be\ removed}$) is removed by immersion in an etching solution in dependence of the concentration of the solution and/or the immersion time.

**3.** Method in accordance with Claim 2, **characterized in that** the rotor wheel to be treated is completely immersed in the etching solution and that the respectively smallest diverging blade mass is removed from the blades in a sequence of etching operations, with the disk of the rotor wheel and the blade/the blades with the smallest mass being covered by a masking agent protecting the blade portions not to be treated prior to each etching operation,

**4.** Method in accordance with Claim 2, **characterized in that** the rotor wheel to be treated is completely immersed in the etching solution, and that from each blade the mass respectively exceeding the smallest blade mass is removed individually in a single etching operation, with the remaining rotor wheel portions being covered by a masking agent during the respective etching operation.

**5.** Method in accordance with Claim 2, **characterized in that** the blades are individually immersed in an etching bath adapted to the size of the blade and that the blade mass respectively exceeding the smallest blade mass is removed in a single etching operation.

6. Method in accordance with Claim 1, **characterized in that** prior to series production of the rotor wheels, a test rotor wheel fitted with strain gauges is subjected to a test run under operating conditions, with the stiffening of the blade and the increase of natural frequency due to the application of the strain gauges is compensated for by increased material removal during the etching of the blade.

7. Method in accordance with Claim 1, **characterized in that** the natural frequency of the individual blades is measured in a state in which the blade is largely decoupled from the other blades which have been strongly detuned by applying an additional mass, with the blade to be measured being excited by a modal hammer and subsequently the natural frequency ($f_{blade}$) being measured contactless using a laser vibrometer.

8. Method in accordance with Claim 1, **characterized in that** the rotor wheels are manufactured by milling and/or electrochemical machining and/or friction welding.

**Revendications**

1. Procédé de fabrication de rotors formés en construction monobloc destinés à des compresseurs et des turbines, en particulier à des moteurs à turbine à gaz, dans lequel les rotors comprenant un disque avec des aubes formées sur la circonférence sont fabriqués au moyen de méthodes de façonnage conventionnelles, puis l'épaisseur et la longueur de corde des aubes sont réduites par un traitement chaque dans un agent caustique, **caractérisé en ce**

  - **qu'**après le façonnage est mesurée la fréquence propre ($f_{aube}$) de chaque aube et
  - **qu'**à partir du rapport existant entre la fréquence propre d'aube et la masse d'aube, est déterminée la masse d'aube ($m_{aube}$) respective de chaque aube et
  - **que** pour chaque aube, la différence ($\Delta m_{mat\ à\ éliminer}$) de chaque masse d'aube par rapport à l'aube présentant la plus faible masse d'aube ($m_{aube\ mini}$) est déterminée et
  - **qu'**ensuite sur chaque aube, la différence de masse d'aube par rapport à la plus faible masse d'aube est éliminée avec un agent caustique, si bien que toutes les aubes avec les plus faibles masse d'aube et fréquence propre ($m_{aube\ mini}$, $f_{aube\ mini}$) présentent des masses et des fréquences propres concordantes pour l'essentiel.

2. Procédé selon la revendication n° 1, **caractérisé en ce que** l'élimination de la masse d'aube excédentaire ($\Delta m_{mat\ à\ éliminer}$) s'effectue par immersion dans une solution caustique en fonction de la concentration de la solution caustique et/ou de la durée d'immersion.

3. Procédé selon la revendication n° 2, **caractérisé en ce que** le rotor à traiter est intégralement plongé dans la solution caustique et que sur les aubes, chaque plus petite différence de masse d'aube est éliminée dans des étapes de rongeage successives, sachant qu'avant chaque étape de rongeage, le disque de rotor et l'aube/les aubes avec la plus faible masse d'aube sont recouverts par un agent à masquer qui protège les parties d'aube qui ne doivent pas être traitées.

4. Procédé selon la revendication n° 2, **caractérisé en ce que** le rotor à traiter est intégralement plongé dans la solution caustique et que sur chaque aube est éliminée individuellement dans une unique étape de rongeage chaque masse d'aube dépassant la plus faible masse d'aube, sachant que pendant l'étape de rongeage en question, les autres parties du rotor sont recouvertes par un agent à masquer.

5. Procédé selon la revendication n° 2, **caractérisé en ce que** les aubes sont plongées individuellement dans un bain caustique dont les dimensions sont adaptées à la taille des aubes et que chaque masse d'aube dépassant la plus faible masse d'aube est éliminée dans une unique étape de rongeage.

6. Procédé selon la revendication n° 1, **caractérisé en ce qu'**avant la production en série des rotors, un rotor d'essai muni de jauges d'allongement est soumis à une marche d'essai dans des conditions de fonctionnement, sachant que le raidissement de l'aube et l'augmentation de la fréquence propre dus à la pose des jauges d'allongement sont compensés par une élimination de matière accrue pendant le rongeage de l'aube.

7. Procédé selon la revendication n° 1, **caractérisé en ce que** la mesure de la fréquence propre des différentes aubes est effectuée dans un état largement découplé des autres aubes fortement désaccordées par la pose d'un poids supplémentaire, l'aube à mesurer étant excitée par un marteau modal, et la fréquence propre ($f_{aube}$) étant ensuite mesurée sans contact avec un vibromètre à laser.

8.  Procédé selon la revendication n° 1, **caractérisé en ce que** la fabrication des rotors s'effectue par fraisage et/ou traitement électrochimique et/ou soudure par friction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1239059 A
- EP 1239059 A2